# EUROPÄISCHE PATENTSCHRIFT

(11) **EP 2 693 063 B1**
(45) Veröffentlichungstag und Bekanntmachung des Hinweises auf die Patenterteilung: **09.03.2016**
(21) Anmeldenummer: 13178442.3
(22) Anmeldetag: 30.07.2013
(51) Int. Cl.: F16B 5/12, F16S 3/02, B60R 13/00, B60R 13/02

(54) **Mehrteiliges Bauteil für ein Fahrzeug mit einem Verbindungsprofilelement**
Multipart component for a vehicle with a connection profile element
Composant en plusieurs parties pour un véhicule comprenant un élément de profil de liaison

(30) Priorität: 30.07.2012 DE 102012106912
(43) Veröffentlichungstag der Anmeldung: 05.02.2014
(73) Patentinhaber: iKON Fahrzeug Design und Engineering GbR, 85092 Kösching (DE); FKT GmbH, 85104 Pförring (DE)
(72) Erfinder: Körber, Stefan, 85092 Kösching (DE); Matschat, Dietmar, 85117 Eitensheim (DE)
(74) Vertreter: Schlief, Thomas P.

(56) Entgegenhaltungen:
- DE-A1- 10 205 640
- DE-A1-102009 008 193
- US-A- 5 590 900
- US-A1- 2007 137 004

## Beschreibung

Die vorliegende Erfindung betrifft ein mehrteiliges Bauteil für ein Fahrzeug, insbesondere für ein Personenkraftfahrzeug, wobei das Bauteil wenigstens ein Trägerelement und wenigstens ein mit dem Trägerelement verbundenes, eine Sichtseite aufweisendes Deckelement umfasst.

Im Stand der Technik bei Kraftfahrzeugen sind verschiedene Systeme und Verfahren bekannt geworden, um Teile von mehrteiligen Bauteilen miteinander zu verbinden oder um Zierteile, Abdeckungen und dergleichen auf Bauteilen zu montieren. So werden beispielsweise Zierteile oder Blenden häufig mit angeformten, federnden Clips versehen, um in entsprechende Befestigungsöffnungen eines Trägerbauteils eingeclipst zu werden. Da die Clipelemente verdeckt sind, kann hierdurch eine optisch ansprechende Verbindung geschaffen werden, die allerdings nur für einfache und leichte Bauteile, wie Zierteile, geeignet ist. Für die Befestigung von schwereren Teilen auf einem Trägerteil oder von Teilen, welche größeren Belastungen ausgesetzt sind, sind derartige Verbindungen weniger geeignet.

Die DE 102 05 640 A1 zeigt gemäß dem, Oberbegriff des Anspruchs 1 eine derartige Befestigung von Kunststoffverkleidungen an einem Rohbau mittels einer ebenfalls aus Kunststoff bestehenden Clipsleiste. Die Clipsleiste bildet dabei eine nach außen hin sichtbare, optisch ansprechende Oberfläche und deckt zugleich einen Spalt zwischen den Verkleidungsteilen ab. Die Clipsleiste weist mehrere Spreizclips auf, mittels welchen die Verkleidungsteile an dem Rohbau befestigt werden und welche durch die Clipsleiste verdeckt sind. Die Kunststoffverkleidungen sowie die Clipsleiste sind keinen äußeren Belastungen ausgesetzt, sondern müssen lediglich ihr Eigengewicht tragen.

Die US 2007/0137004 A1 zeigt ebenfalls die Befestigung bzw. Verbindung zweier Bauteile mittels Spreizclips. Im Unterschied zum vorbeschriebenen Stand der Technik sind dabei lediglich mehrere einzelne, bolzenartige Clipelemente vorgesehen, die nicht durch eine Leiste miteinander verbunden sind. Auch diese Clipelemente dienen lediglich der Befestigung leichter Verkleidungsteile an einem Trägerteil. Die Clipelemente sind dabei im Gebrauchszustand ebenso wie das Trägerteil durch das Verkleidungsteil verdeckt, so dass durch das Verkleidungsteil ein ansprechendes Erscheinungsbild geschaffen wird. Auch hier muss lediglich das Eigengewicht des Verkleidungsteils durch die Clipelemente aufgenommen werden.
Neben reinen Zierteilen werden aus Kostengründen zahlreiche weitere Bauteile eines Kraftfahrzeugs als Kunststoffteile hergestellt. Weisen diese Bauteile komplexere Geometrien auf, so werden diese häufig aus zwei oder mehreren Teilen zusammengesetzt. Das Trägerelement und das Deckelement bilden dabei eine Oberschale und eine Unterschale und können auch als Gleichteile ausgeführt sein. Werden diese Teile miteinander verschraubt, so kann dadurch zwar eine sehr stabile Verbindung erreicht werden, allerdings ist das Erscheinungsbild durch die sichtbar bleibenden Schrauben beeinträchtigt, selbst wenn diese mittels spezieller Abdeckkappen verdeckt werden.

Häufig werden daher Teile eines Bauteils mittels spezieller, von außen nicht sichtbarer Verbindungselemente verbunden. Die DE 10 2009 008 193 A1 zeigt beispielsweise ein Windschott, welches zweiteilig, bestehend aus einer Oberschale und einer Unterschale aus einem Kunststoffmaterial hergestellt ist. Die beiden Schalen werden entweder durch angeformte Verbindungselemente wie Zapfen und entsprechende Aufnahmen oder durch separate, krallenartige Klammern miteinander zu einem Rahmenprofil verbunden. Die Klammern sind dabei im Inneren des Rahmenprofils angeordnet und werden durch die Oberschale und die Unterschale verdeckt. Um die Stabilität der Kunststoffschalen zu verbessern, weisen diese innenseitig Versteifungsrippen auf. Die Windschotts halten hierdurch den angreifenden Windkräften sowie den Betätigungskräften bei sachgemäßer Bedienung stand. Bei erhöhter Krafteinwirkung könnten jedoch unzulässige Verformungen auftreten, wodurch die Verbindung der beiden Schalen gelöst werden könnte oder es zu Beschädigungen an dem Windschott kommen könnte. Die Einsatzgebiete derartiger, aus mehreren Kunststoffteilen zusammengesetzter Bauteile sind daher begrenzt.

Aufgabe der vorliegenden Erfindung ist es, ein aus wenigstens zwei Teilen zusammengesetztes Bauteil für ein Kraftfahrzeug vorzuschlagen, welches verschiedenen Beanspruchungen standhält und zugleich ein optisch ansprechendes Erscheinungsbild aufweist.

Die Aufgabe wird gelöst mit den Merkmalen des Anspruchs 1.

Ein Bauteil für ein Kraftfahrzeug umfasst wenigstens ein Trägerelement und wenigstens ein mit dem Trägerelement verbundenes, eine Sichtseite aufweisendes Deckelement und ist somit zumindest zweiteilig aufgebaut. Es ist dabei auch möglich, dass auch das Trägerelement eine Sichtseite aufweist. Weiterhin ist der Begriff Trägerelement im Rahmen der vorliegenden Erfindung lediglich dahingehend zu verstehen, dass dieses eine Unterschale oder ein Unterteil des Bauteils bildet. Das Trägerelement muss jedoch nicht unbedingt eine tragende Funktion in dem Bauteil haben. Erfindungsgemäß beinhaltet das Bauteil weiterhin wenigstens ein Verbindungsprofilelement, welches das Trägerelement und das Deckelement miteinander verbindet, wobei das Verbindungsprofilelement wenigstens zwei, vorzugsweise einander gegenüberliegend angeordnete und sich vorzugsweise über seine gesamte Längserstreckung erstreckende Verbindungsbereiche aufweist, welche jeweils in wenigstens einen dazu korrespondierenden Verbindungsbereich des wenigstens einen Trägerelements und des wenigstens einen Deckelements eingreifen. Das wenigstens eine Verbindungsprofilelement reicht zumindest über einen Teil seiner Längserstreckung bis an die Außenseite des Bauteils oder darüber hinaus und bildet einen Teil der Oberfläche des Bauteils.

Das Verbindungsprofilelement ermöglicht eine besonders einfache, werkzeuglose Montage, da das Trägerelement, das Verbindungsprofilelement und das Deckelement lediglich aufeinander platziert werden müssen und, sofern die Verbindungsbereiche des Verbindungsprofilelements einander gegenüberliegen, lediglich noch ein Montagedruck in einer einzigen Richtung aufgebracht werden muss. Dadurch, dass das Verbindungsprofilelement in-seinem Verbindungsbereichen jeweils mit einem Verbindungsbereich des Trägerelements und des Deckelements in Eingriff steht, verbindet es nicht nur die einzelnen Teile des Bauteils, sondern bildet zugleich einen das Bauteil versteifenden Kern, welcher dem Bauteil in Montagerichtung eine hohe Stabilität verleiht. Dadurch, dass das Verbindungsprofilelement zwischen dem Trägerelement und dem Deckelement bis an die Außenseite des Bauteils reicht, wird zugleich eine sehr hohe Stabilität in einer weiteren Richtung erzielt, so dass das Bauteil in mehreren Raumrichtungen eine hohe Stabilität aufweist.

Vorzugsweise weist das Verbindungsprofilelement zwischen den beiden Verbindungsbereichen zumindest einen seitlich auskragenden Quersteg auf, welcher zwischen dem Trägerelement und dem Deckelement bis an die Außenseite des Bauteils reicht. Das Bauteil weist durch den Quersteg einen hohen Biegewiderstand in dieser Richtung auf und kann daher auch zum Einsatz kommen, wenn hohe Betätigungskräfte auftreten. Zugleich kann durch den bis an die Außenseite des Bauteils reichenden Quersteg ein Verschleißschutz für das Deckelement und/oder das Trägerelement gebildet werden. Dadurch, dass lediglich der Quersteg des Verbindungsprofilelements bis an die Außenseite des Bauteils reicht, kann zugleich eine optisch ansprechende Absetzung, beispielsweise in Form einer Designkante oder nach Art eines Designeinsatzes, bereitgestellt werden. Weiterhin ermöglicht es das bis an die Außenseite reichende, besonders stabile Verbindungsprofilelement, weitere Zusatzfunktionen, wie beispielsweise Beleuchtung oder Halterung von weiteren Bauteilen, zu implementieren.

Eine besonders stabile und dauerhafte Verbindung des Verbindungsprofilelements mit dem Trägerelement und dem Deckelement kann erzielt werden, wenn das wenigstens eine Verbindungsprofilelement in seinen Verbindungsbereichen angeformte, vorzugsweise widerhakenartig ausgebildete Fixierelemente aufweist, welche mit den Verbindungsbereichen des Trägerelements und des Deckelements eine formschlüssige Verbindung bilden. Bevorzugt ist dabei eine Vielzahl einzelner, widerhakenartig ausgebildeter Fixierelemente vorgesehen, welche entlang des Verbindungsbereichs verteilt angeordnet sind. Es kann jedoch auch in jedem der Verbindungsbereiche des Verbindungsprofilelements jeweils wenigstens ein einziges langgezogenes, sich über die gesamte Länge des Verbindungsprofilelements erstreckendes Fixierelement angeordnet sein. Eine Vielzahl einzelner Fixierelemente kann auch durch eine raspel- oder rändelartige Profilierung oder eine sonstige Oberflächenprofilierung bereitgestellt werden. Wesentlich ist dabei, dass die Fixierelemente bei der Montage in das weichere Material des Trägerelerrients und des Deckelements eindringen, sich dort krallenartig verhaken und hierdurch einen Formschluss bereitstellen. Vorteilhaft dabei ist, dass das Trägerelement und das Deckelement spielfrei miteinander verbunden werden können und hierdurch die Zentrierung des Trägerelements und des Deckelements aufeinander problemlos erreicht werden kann. Zudem kann durch die spielfreie Verbindung die Geräuschentwicklung des Bauteils bei Belastung vermindert werden und unangenehme Knarzgeräusche können vermieden werden.

Vorteilhaft ist es nach einer Weiterbildung der Erfindung, wenn der seitlich auskragende Quersteg nicht nur bis an die Außenseite des Bauteils reicht, sondern sogar geringfügig darüber hinaussteht. Der Quersteg kann hierdurch nicht nur einen verbesserten Verschleißschutz bieten, sondern kann auch als Gleitkante, beispielsweise in einem Laderaum des Kraftfahrzeugs, dienen.

Der auskragende Quersteg kann in dem einen Teil der Oberfläche des Bauteils bildenden Bereich auch mit einer Nut versehen sein, welche eine Gleitnut für darin verschieblich gelagerte Bauteile, beispielsweise in einem Ladeboden des Kraftfahrzeugs, bilden kann. Der Quersteg kann in diesem Fall bündig mit der Oberfläche des Bauteils abschließen oder auch geringfügig darüber hinausstehen, um eine Art Riffelung an der Oberfläche des Bauteils zu bilden.

Vorteilhaft für eine stabile Verbindung ist es, wenn die Länge des wenigstens einen Verbindungsprofilelements wenigstens so lang wie seine Höhe und Breite ist. Im Einzelfall kann jedoch gerade bei kleineren Bauteilen das Verbindungsprofilelement auch etwas kürzer als hoch und breit sein. Die Höhe bezieht sich dabei auf den Bereich, der durch die Verbindungsbereiche definiert wird und die Breite auf den Bereich, der durch den Quersteg definiert wird, während sich die Länge im Wesentlichen senkrecht dazu erstreckt.

Ist das wenigstens eine Verbindungsprofilelement lang gestreckt, d. h. dass die Länge des Verbindungsprofilelements wenigstens das Zweifache, vorzugsweise wenigstens das Vierfache, seiner Höhe und Breite beträgt, kann die Stabilität des Bauteils gegen von außen angreifende Betätigungskräfte weiterhin verbessert werden. Zugleich wird eine besonders haltbare und sichere Verbindung zwischen dem Trägerelement und dem Deckelement erzielt.

Nach einer besonders vorteilhaften Weiterbildung der Erfindung erstreckt sich das wenigstens eine Verbindungsprofilelement im Wesentlichen über die gesamte Länge des Trägerelements und/oder des Deckelements. Da das Verbindungsprofilelement kontinuierlich über nahezu die gesamte Längserstreckung zumindest eines der beiden Teile mit diesem verbunden ist und andererseits ein Quersteg über nahezu die gesamte Längserstreckung zumindest eines der beiden Teile zur Verfügung steht, kann ein sehr stabiles Bauteil erreicht werden, bei welchem zugleich die einzelnen Teile sehr stabil miteinander verbunden sind. Grundsätzlich ist es aber auch möglich, mehrere einzelne Verbindungsprofilelemente hintereinander oder je nach Ausdehnung des Bauteils auch nebeneinander anzuordnen.

Bei einer vorteilhaften Ausführungsform der Erfindung weist das Trägerelement im Wesentlichen die gleichen Abmessungen wie das Deckelement auf und weist ebenfalls eine Sichtseite auf. Das Trägerelement und das Deckelement können hierdurch zu einem kompakten Bauteil verbunden werden, welchem mittels des zumindest teilweise bis an die Oberfläche reichenden Querstegs ein besonders ansprechendes Erscheinungsbild verliehen werden kann. Durch die große Stabilität des Bauteiles kann ein derartiges Bauteil auch in Bereichen eingesetzt werden, in welchen hohe Betätigungskräfte in verschiedenen Richtungen auftreten können, wie beispielsweise Haltegriffen oder ähnliche.

Nach einer Weiterbildung der Erfindung ist es vorteilhaft, wenn das wenigstens eine Verbindungsprofilelement an dem wenigstens einen Quersteg eine Befestigungsvorrichtung, insbesondere eine Nut, zur Befestigung eines Funktionselements oder eines Dekorationselements aufweist. Aufgrund seiner im Vergleich zu dem Deckelement und dem Trägerelement großen Stabilität können dabei auch schwerere Bauteile bzw. Funktionselemente an dem Quersteg angeordnet werden. Anstelle einer Nut zur Befestigung eines Funktionselements oder eines Dekorationselements können auch Haken, Pins oder Befestigungsbohrungen zur Befestigung weiterer Bauteile vorgesehen sein.

Nach einer vorteilhaften Ausführungsform der Erfindung ist in der Nut eine Einlegeleiste angeordnet. Beispielsweise kann eine Zierleiste eingeclipst sein.

Nach einer anderen vorteilhaften Weiterbildung der Erfindung ist in der Nut ein Beleuchtungselement, insbesondere ein LED-Band, befestigt. Durch das Verbindungsprofilelement bzw. den Quersteg des Verbindungsprofilelements, welcher bis an die Außenseite des Bauteiles reicht, ist es in vorteilhafter Weise möglich, eine Vielzahl von Funktionen in einem einzigen Bauteil zusammenzufassen und dieses dadurch vielseitig einzusetzen.

Nach einer anderen Weiterbildung der Erfindung ist in der Nut eine Halterung für einen Gebrauchsgegenstand, beispielsweise eine Handyhalterung oder ein Getränkehalter, befestigt.

Besonders vorteilhaft ist es weiterhin, wenn das wenigstens eine Verbindungsprofilelement aus einem metallischen Material, vorzugsweise aus einem Aluminiummaterial, besteht. Dieses bietet eine für die meisten Einsatzzwecke ausreichende Stabilität und zugleich eine besonders ansprechende Oberfläche, welche auch ohne eine zusätzliche Oberflächenbehandlung ästhetischen Gesichtspunkten genügt. Besonders vorteilhaft bei der Herstellung des Verbindungsprofilelements aus einem metallischen Material ist es, dass hierfür auch kostengünstige Halbzeuge verwendet werden können. Es ist jedoch auch möglich, das Verbindungsprofilelement aus einem besonders stabilen, insbesondere karbon- oder glasfaserverstärkten Kunststoffmaterial herzustellen.

Nach einer Weiterbildung der Erfindung ist eine Oberflächenbehandlung des Verbindungsprofilelements zumindest in dem die Oberfläche des Bauteils bildenden Bereich möglich. Insbesondere ist es vorteilhaft, wenn der Quersteg des Verbindungsprofilelements in den Teil, welcher einen Teil der Oberfläche des Bauteils bildet, oberflächenbehandelt ist, insbesondere poliert oder gebürstet ist. Hierbei sind je nach Material des Verbindungsprofilelements zahlreiche Oberflächenbehandlungen, wie Beschichten, Lackieren, Strukturpolieren usw. möglich.

Ebenfalls vorteilhaft ist es, wenn das Verbindungsprofilelement in dem Bereich, welcher einen Teil der Oberfläche des Bauteils bildet, eine gegenüber der Querschnittsfläche des Querstegs vergrößerte Oberfläche aufweist. Hierdurch kann wiederum die Stabilität des Bauteils noch erhöht werden und zugleich eine größere optische Absetzung durch den Quersteg erzielt werden.

Nach einer vorteilhaften Ausführung der Erfindung ist das Verbindungsprofilelement als Formteil, insbesondere als Druckguss- oder Spritzgussstück hergestellt. Das Verbindungsprofilelement kann hierdurch einer Kontur des Deckelements oder des Bauteils entsprechend vorgeformt gegossen werden, so dass nicht nur Profile, sondern auch Bauteile mit komplexer Formgebung hergestellt werden können.

Eine einfache und kostengünstige Ausführung eines Verbindungsprofilelements kann erreicht werden, wenn das Verbindungsprofilelement aus einem Endlosmaterial, insbesondere als Strangpressprofil oder Stranggussprofil, hergestellt ist. Die Fixierelemente können dabei Teil des Profils sein und sich über die gesamte Länge des Verbindungsprofilelements erstrecken.
Das Verbindungsprofilelement kann jedoch auch kostengünstig als Blechteil in einem Stanzverfähren, einem Biegeverfahren oder auch einem Walzverfahren hergestellt sein, wobei die Fixierelemente aus dem Grundmaterial herausgebogen werden können oder durch eine Oberflächenprofilierung erzeugt werden können. Auch hier ist eine Vorformung des Verbindungsprofilelements gut möglich.

Nach einer anderen vorteilhaften Weiterbildung der Erfindung weist der Quersteg des Verbindungsprofilelements entlang seiner Längserstreckung wenigstens einen ersten Abschnitt auf, der bis an die Außenseite des Bauteils reicht und einen Teil der Oberfläche des Bauteils bildet, und wenigstens einen zweiten Abschnitt, welcher von dem Trägerelement und/oder dem Deckelement verdeckt ist. Beispielsweise können mehrere derartige Abschnitte jeweils wechselnd oder in bestimmten Mustern aufeinanderfolgend angeordnet sein, so dass bei guter Stabilität des Bauteils verschiedene optische Effekte erzielbar sind.

Weiterhin ist es vorteilhaft, wenn das wenigstens eine Verbindungsprofilelement selbsttragend ausgeführt ist und somit das tragende Element des Bauteils darstellt, während das Deckelement und das Trägerelement als nicht tragende Blenden ausgeführt sind. Da das Verbindungsprofilelement die Stabilität des Bauteils bereitstellt und durch den Quersteg zugleich einen Verschleißschutz bietet, können für das Trägerelement und das Deckelement kostengünstige, weiche oder wenig verschleißfeste Kunststoffe verwendet werden.

Nach einer Weiterbildung der Erfindung sind die Fixierelemente und/oder die Oberflächenprofilierung in den beiden Verbindungsbereichen gegenläufig zueinander angeordnet. Dadurch kann eine einfache Montage des Trägerelements und des Deckelements mit dem Verbindungsprofilelement in einem einzigen Arbeitsgang erreicht werden, wobei durch die Ausrichtung der Fixierelemente bzw. der Profilierung ein unbeabsichtigtes selbsttätiges Lösen der Verbindung vermieden wird.

Weitere Vorteile der Erfindung werden anhand der nachfolgend dargestellten Ausführungsbeispiele beschrieben. Es zeigen:
- **Fig. 1 bis 4**: verschiedene Ausführungen eines Bauteils, bei welchen das Trägerelement und das Deckelement jeweils eine Sichtseite aufweisen und als Halbschalen ausgeführt sind, in einer Querschnittsdarstellung,
- **Fig. 5**: ein Bauteil mit einem Verbindungsprofilelement, an welchem ein zusätzliches Funktionselement befestigt ist, in einer Querschnittsdarstellung,
- **Fig. 6 und 7**: ein Bauteil, bei welchem das Verbindungsprofilelement über die gesamte Länge des Trägerelements und des Deckelements hinausragt, in einer Vorderansicht und in einer Draufsicht,
- **Fig. 8**: ein Bauteil mit einem Verbindungsprofilelement, an welchem ein Dekorationselement angeordnet ist, in einer Querschnittsdarstellung,
- **Fig. 9**: ein Bauteil mit einer alternativen Ausführung eines Verbindungsprofilelements, in einer Querschnittsdarstellung, sowie
- **Fig. 10 und 11**: ein Verbindungsprofilelement, welches unterschiedliche Abschnitte aufweist, in einer schematischen Schnittdarstellung und einer Vorderansicht.

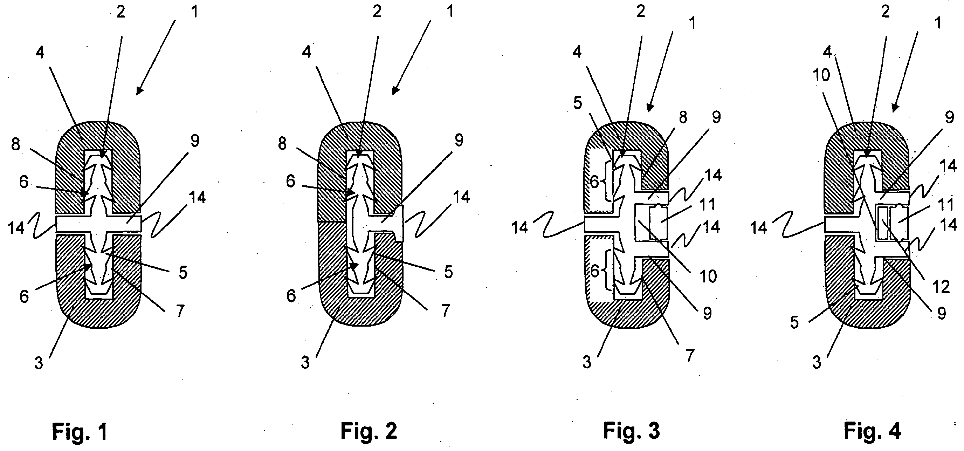

Figur 1 zeigt ein erfindungsgemäßes Bauteil 1 mit einem Trägerelement 3 und einem Deckelement 4. Vorliegend weisen das Trägerelement 3 und das Deckelement 4 jeweils eine Sichtseite auf, es ist jedoch ebenso möglich, dass das Trägerelement 3 an irgendeiner Stelle in einem Kraftfahrzeug eingebaut ist und entsprechend nach Montage des Verbindungsprofilelements 2 und des Deckelements 1 nicht mehr sichtbar ist. Zur Verbindung des Deckelements 4 und des Trägerelements 3 ist ein Verbindungsprofilelement 2 vorgesehen, das vorliegend zwei einander gegenüberliegend angeordnete Verbindungsbereiche 6 zur Verbindung mit dem Deckelement 4 und dem Trägerelement 3 aufweist. Das Trägerelement 3 sowie das Deckelement 4 weisen zu den Verbindungsbereichen 6 des Verbindungsprofilelements 2 korrespondierende Verbindungsbereiche 7 und 8 auf, welche vorliegend in Form einer Nut ausgebildet sind und welche mit den Verbindungsbereichen 6 des Verbindungsprofilelements 2 in Eingriff stehen.

Die Verbindungsbereiche 6 müssen dabei nicht zwangsläufig einander gegenüberliegen. Je nach Form des Bauteils 1, wie des Trägerelements 3 und des Deckelements 4, ist es auch möglich, dass die Verbindungsbereiche 6 des Verbindungsprofilelements 2 einen Winkel miteinander einschließen. Weiterhin ist es möglich, dass das Verbindungsprofilelement 2 mehr als zwei Verbindungsbereiche 6 zur Verbindung mit mehreren Deckelementen 4 oder auch mehreren Trägerelementen 3 aufweist.

Das Verbindungsprofilelement 2 ist in seinen Verbindungsbereichen 6 mit angeformten, widerhakenartig ausgebildeten Fixierelementen 5 versehen, welche bei der Montage in das Material des Deckelements 4 bzw. des Trägerelements 3 eingedrückt werden und sich dort verhaken, so dass sie mit den Verbindungsbereichen 7 und 8 des Trägerelements 3 und des Deckelements 4 jeweils eine formschlüssige Verbindung bilden. Das Verbindungsprofilelement 2 weist vorliegend zwei einander gegenüberliegende, seitlich auskragende Querstege 9 auf, die sich bis an die Außenseite des Bauteils 1 erstrecken und dort einen Teil der Oberfläche des Bauteils 1 bilden. Das Bauteil 1 weist hierdurch eine hohe Stabilität nicht nur in Richtung der Orientierung der beiden Verbindungsbereiche 6 auf, sondern auch in einer quer zu der durch die Verbindungsbereiche 6 definierten Montagerichtung.

Vorliegend weist das Bauteil 1 in beiden Richtungen quer zu den Verbindungsbereichen 6 eine besonders hohe Stabilität auf, so dass dieses auch für Einsatzzwecke, in welchen Betätigungskräfte aus verschiedensten Richtungen einwirken, einsetzbar ist, wie beispielsweise für Haltegriffe oder Halterungen für die Gepäcksicherung. Der Quersteg 9 muss sich dabei nicht, wie vorliegend dargestellt, senkrecht zu den Verbindungsbereichen 6 des Verbindungsprofilelements 2 erstrecken, sondern kann mit diesen auch einen Winkel einschließen. Dadurch, dass der Quersteg 9 bis an die Außenseite des Bauteils 1 reicht, wird ein Verschleißschutz an dem Bauteil erreicht, so dass dieses auch für häufig betätigte bzw. beanspruchte Bauteile einsetzbar ist. Für die Deckelemente 4 und ggf. auch die Trägerelemente 3 können daher auch einfache und kostengünstige Kunststoffe zur Anwendung kommen. Der sichtbare Teil des Verbindungsprofilelements 2 bzw. des Querstegs 9 bildet zugleich eine Designkante 14 an dem Bauteil 1. Das Verbindungsprofilelement 2 kann beispielsweise aus einem Aluminiummaterial hergestellt und gebürstet, poliert oder strukturpoliert sein, oder es kann aus einem unterschiedlich eingefärbten oder unterschiedlich lackierten Kunststoffmaterial bestehen. Weiterhin ist auch nur eine Klarlackbeschichtung als Schutzüberzug möglich.

Figur 2 zeigt eine andere Ausführung eines Bauteils 1, bei welchem das Verbindungsprofilelement 2 lediglich auf einer Seite mit einem seitlich auskragenden Quersteg 9 versehen ist. Der Quersteg 9 weist dabei in dem die Außenseite des Bauteils 1 bildenden Bereich eine vergrößerte Oberfläche auf, wodurch eine besonders stabile und zugleich optisch akzentuierte Designkante 14 entsteht, welche auch einen Griffbereich des Bauteils 1 bilden kann. Die Fixierelemente 5 sind vorliegend symmetrisch auf beiden Seiten des Verbindungsprofilelements 2 angeordnet.

Figur 3 zeigt eine andere Ausführung eines erfindungsgemäßen Bauteils 1, bei welchem das Verbindungsprofilelement 2 auf einer Seite zwei seitlich auskragende Querstege 9 besitzt, und zugleich eine Befestigungsvorrichtung, vorliegend eine Nut 10 zur Befestigung weiterer Elemente wie Funktionsbauteile oder Dekorationselemente, aufweist. Wie der Figur entnehmbar, sind dabei die Fixierelemente 5 nicht vollständig symmetrisch auf beiden Seiten des Verbindungsprofilelements 2 angeordnet. In der Nut 10 ist vorliegend eine Einlegeleiste 11 eingelegt. Diese kann beispielsweise ein Gummieinleger sein, welcher einfach in die Nut 10 eingedrückt wird und eine farbliche Absetzung bildet oder auch aufgrund seiner Eigenschaften ein verbessertes Griffgefühl vermittelt.

Anstelle eines Gummieinlegers kann jedoch auch eine Zierleiste aus einem Metall- oder Kunststoffmaterial eingelegt, eingeklebt oder auch eingeclipst sein. Zum Einclipsen einer derartigen Einlegeleiste können rippenartige Strukturen, Nuten oder auch eine Oberflächenprofilierung an den Innenseiten der Querstege 9 vorgesehen werden. Ein derartiges Verbindungsprofilelement 2 kann aufgrund der vergleichsweise komplexen Geometrie in günstiger Weise als Strangguss- oder Strangpressprofil hergestellt werden, wobei die Fixierelemente 5 im gleichen Arbeitsgang mit angeformt werden können. Die Fixierelemente 5 können sich dabei über die gesamte Länge des Verbindungsprofilelements erstrecken, oder als einzelne hervorstehende Haken an das Verbindungsprofilelement 2 angeformt, auch nachträglich in einem weiteren Arbeitsgang angeformt, sein.

Figur 4 zeigt eine weitere Ausführung der Erfindung, bei welcher in der Nut ein Beleuchtungselement 12, vorliegend ein LED-Band, angeordnet ist. Zur Erzielung besonderer optischer Effekte und zum Schutz des LED-Bands 12 kann, wie vorliegend gezeigt, über dem LED-Band noch eine Einlegeleiste 11 aus einem transparenten Kunststoffmaterial vorgesetzt sein. Aufgrund der bis an die Außenseite des Bauteils 1 reichenden Querstege 9, welche zugleich Verschleißschutzkanten bilden, sind das Beleuchtungselement 12 und die Einlegeleiste 11 vor Beschädigungen geschützt. Es können daher auch andere Beleuchtungselemente 12 oder ggf. auch ein LED-Band ohne eine zusätzliche Einlegeleiste 11 angeordnet werden.

Weiterhin können auch elektrische Leitungen in der Nut 10 verlegt werden, welche dann sowohl durch die Querstege 9 und ggf. auch durch eine Einlegeleiste 11 geschützt sind. Das Bauteil 1 kann beispielsweise ein Verkleidungsbauteil eines Kraftfahrzeugs sein, wobei das die Innenverkleidung bildende Deckelement 4 mittels des Verbindungsprofilelements 2 mit einem Karosserieteil oder einem angrenzenden Innenverkleidungsteil als Trägerelement 3 verbunden ist.

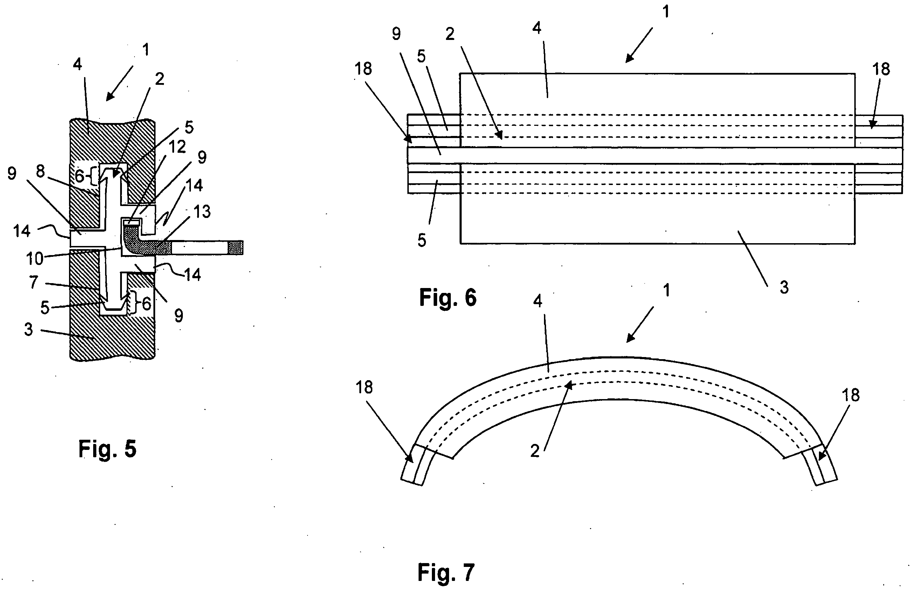

Figur 5 zeigt eine weitere Ausführung der Erfindung, bei welcher das Verbindungsprofilelement 2 als Befestigungsvorrichtung ebenfalls eine Nut 10 zur Befestigung eines Funktionselements, wie beispielsweise eine Halterung 13 für einen ablegbaren Gebrauchsgegenstand, aufweist. Die Halterung 13 kann beispielsweise ein Getränkehalter, eine Handyhalterung oder auch eine TV-Aufnahme sein, welche durch das Einbringen in die Nut 10 aufgrund der großen Stabilität des Verbindungsprofilelements 2 sicher gehaltert werden kann. Auch hier ist es wiederum möglich, zusätzlich ein Beleuchtungselement 12 zu integrieren. Das Beleuchtungselement 12 ist vorliegend verdeckt angeordnet. Ebenso wie vorbeschrieben können weitere optische Effekte erzielt werden, wenn Halterungen 13 oder andere Funktionselemente aus einem transparenten Material wie Plexiglas an der Befestigungsvorrichtung montiert werden.

Eine weitere Ausführungsform der Erfindung ist in den Figuren 6 und 7 in einer schematischen Vorderansicht und Draufsicht gezeigt. Das Bauteil 1 besitzt eine Konturierung in mehreren Raumrichtungen. Das Verbindungsprofilelement 2 ist, wie der Figur 7 entnehmbar, entsprechend der Kontur des Bauteils 1 vorgeformt. Das Deckelement 4 und das Trägerelement 3 sind vorliegend als Gleichteile ausgeführt, so dass sich ein symmetrisches Bauteil 1 ergibt. Dies ist jedoch nicht unbedingt erforderlich. Ein derartig vorgeformtes Verbindungsprofilelement 2 kann in besonders günstiger Weise als Druckguss- oder Spritzgussstück hergestellt werden, wobei vorteilhafter Weise die Fixierelemente 5 ebenfalls mit angegossen oder angespritzt sind. Das Verbindungsprofilelement 2 erstreckt sich dabei vorzugsweise über die gesamte Länge des Bauteils 1.

Vorliegend ist eine Variante gezeigt, bei welcher das Verbindungsprofilelement 2 seitlich noch über die Länge des Trägerelements 3 und des Deckelements 4 hinausragt. Die seitlich überstehenden Enden 18 dienen zugleich der Befestigung des Bauteils 1 an einem weiteren Bauteil 1 oder in dem Kraftfahrzeug. Hierzu können bei entsprechender Ausführung des angrenzenden Bauteils 1 die bereits vorhandenen Fixierelemente 5 vorteilhaft genutzt werden. Es ist jedoch auch möglich, in den überstehenden Enden 18 eine Verschraubung vorzusehen. Vorliegend ist der Quersteg 9 über die gesamte Länge des Verbindungsprofilelements 2 ausgebildet, es ist jedoch ebenso möglich, den Quersteg 9 im Bereich der überstehenden Enden auszunehmen. Ist das Verbindungsprofilelement 2 ein Formteil, so kann dies bereits bei der Herstellung erfolgen.

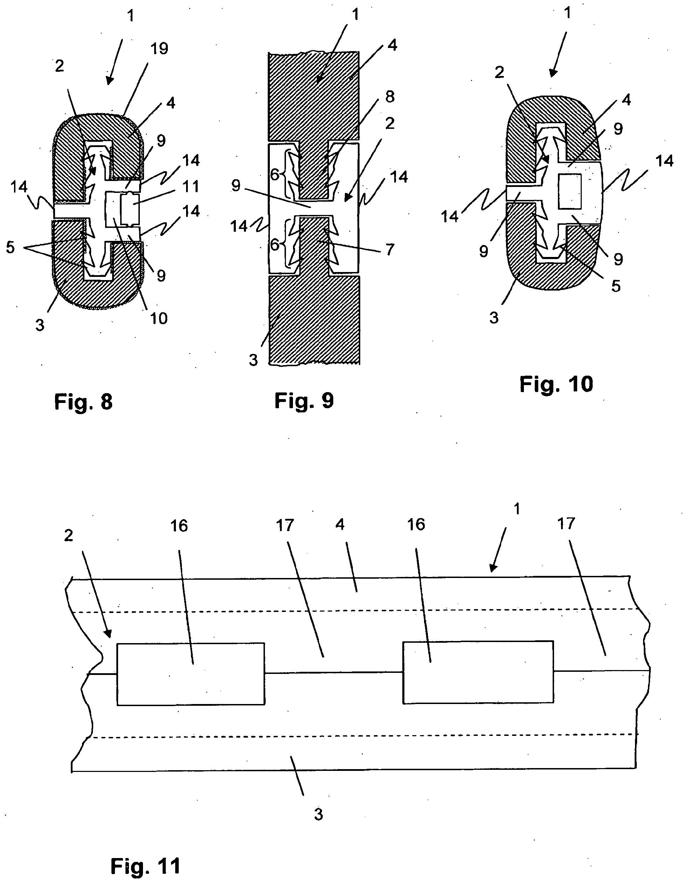

Nach einer anderen Ausführung der Erfindung, welche in Figur 8 dargestellt ist, kann zumindest das Deckelement 4, ggf. auch das Trägerelement 3, mit einem Bezug 19 aus einem Flächenmaterial versehen sein. Wie der Darstellung entnehmbar, dienen dabei die Fixierelemente 5 des Verbindungsprofilelements 2 zugleich der Befestigung und Sicherung des Bezugs 19. Das Beziehen kann dabei in vorteilhafter Weise in einem Arbeitsschritt mit der Montage des Trägerelements 3, des Deckelements 4 und des Verbindungsprofilelements 2 zu dem Bauteil 1 erfolgen. Ein Verkleben des Bezugs 19 ist dabei nicht mehr erforderlich.

Figur 9 zeigt eine alternative Ausführungsform der Erfindung, bei welcher die Verbindungsbereiche 6 des Verbindungsprofilelements 2 in Form einer Nut ausgebildet sind, während der damit korrespondierende Verbindungsbereich 7 des Trägerelements 3 und der damit korrespondierende Verbindungsbereich 8 des Deckelements 4 in Form eines hervorstehenden Stegs ausgebildet sind. Aufgrund der nach innen gekehrten Fixierelemente 5 ist das Handling der Verbindungsprofilelemente 2 bei dieser Ausführung erleichtert und die Verletzungsgefahr reduziert. Das Verbindungsprofilelement 2 bildet auch hier zwischen dem Trägerelement 3 und dem Deckelement 4 einen Teil der Oberfläche des Bauteils 1 bildet. Ein seitlich auskragender Quersteg 9 zwischen den Verbindungsbereichen 6 des Verbindungsprofilelements 2 sorgt wiederum für die erhöhte Stabilität auch quer zur Montagerichtung.

Dabei ist es auch denkbar, das doppel-T-förmige Verbindungsprofilelement 2 aus einem Kunststoffmaterial herzustellen und das Trägerelement 3 und/oder das Deckelement 4 aus einem metallischen Material zu fertigen. Die Fixierelemente 5 sind dabei vorzugsweise in den Verbindungsbereichen 7, 8 des Trägerelements 3 und des Deckelements 4 angeordnet, während die Verbindungsbereiche 6 des Verbindungsprofilelements 2 eine glatte Oberfläche aufweisen.

Figur 10 zeigt eine weitere Abwandlung der Erfindung, bei welcher das Verbindungsprofilelement 2 in dem Teil, welches die Oberfläche des Bauteils 1 bildet, eine vergrößerte Oberfläche aufweist. Das Verbindungsprofilelement 2 weist hierzu zwei in etwa in der gleichen Richtung auskragende Querstege 9 auf, welche miteinander verbunden sind und hierdurch eine vergrößerte Oberfläche bilden.

Ist das Bauteil 1 ein langgestrecktes Bauteil, so ist es, wie in Figur 11 gezeigt, möglich, mittels derartiger Verbindungsprofilelemente eine Vielzahl unterschiedlicher Funktionen und optischer Effekte zu realisieren. Das Verbindungsprofilelement 2 weist dabei erste Abschnitte 16 auf, welche bis an die Außenseite des Bauteils 1 reichen, sowie zweite Abschnitte 17, welche jeweils von dem Trägerelement 3 oder dem Deckelement 4, vorliegend von beiden, verdeckt sind. Beispielsweise können die zweiten, verdeckten Abschnitte 17 durch materialabtragende Bearbeitung eines durchgehend hergestellten Verbindungsprofilelements 2 in bestimmten Bereichen hergestellt werden. Dabei werden beispielsweise die Querstege 9 sowie der sie verbindende, die Außenseite des Bauteils bildende, Bereich stellenweise abgefräst. Ist das Verbindungsprofilelement 2 ein Formteil, so kann es jedoch auch bereits mit den beiden unterschiedlichen Abschnitten 16, 17 gegossen werden.

Die Erfindung ist nicht auf die dargestellten Ausführungsbeispiele beschränkt. Abwandlungen und Kombinationen im Rahmen der Patentansprüche fallen ebenfalls unter die Erfindung.

### Bezugszeichenliste

- 1: Bauteil
- 2: Verbindungsprofilelement
- 3: Trägerelement
- 4: Deckelement
- 5: Fixierelemente
- 6: Verbindungsbereiche des Verbindungsprofilelements
- 7: Verbindungsbereich des Trägerelements
- 8: Verbindungsbereich des Deckelements
- 9: Quersteg
- 10: Nut
- 11: Einlegeleiste
- 12: Beleuchtungselement
- 13: Halterung
- 14: Designkante
- 15: Gleitkante
- 16: erster, sichtbarer Abschnitt
- 17: zweiter, verdeckter Abschnitt
- 18: überstehendes Ende
- 19: Bezug

## Patentansprüche

1. Bauteil (1) für ein Fahrzeug, insbesondere ein Personenkraftfahrzeug, wobei das Bauteil (1) wenigstens ein Trägerelement (3) und wenigstens ein mit dem Trägerelement (3) verbundenes, eine Sichtseite aufweisendes Deckelement (4) umfasst, wobei das Bauteil (1) weiterhin wenigstens ein Verbindungsprofilelement (2) beinhaltet, welches das Trägerelement (3) und das Deckelement (4) miteinander verbindet, und wobei das Verbindungsprofilelement (2) wenigstens zwei_Verbindungsbereiche (6) aufweist, **dadurch gekennzeichnet, dass** die wenigstens zwei Verbindungsbereiche (6) vorzugsweise einander gegenüberliegend angeordnet sind und sich vorzugsweise über die gesamte Längserstreckung des Verbindungsprofilelements erstrecken , wobei die Verbindungsbereiche (6) jeweils in wenigstens einen damit korrespondierenden Verbindungsbereich (7) des wenigstens einen Trägerelements (3) und wenigstens einen damit korrespondierenden Verbindungsbereich (8) des wenigstens einen Deckelements (4) eingreifen, dass das wenigstens eine Verbindungsprofilelement (2) zwischen dem Trägerelement (3) und dem Deckelement (4) zumindest über einen Teil seiner Längserstreckung bis an die Außenseite des Bauteils (1) oder darüber hinaus reicht und zwischen dem Trägerelement (3) und dem Deckelements (4) einen Teil der Oberfläche des Bauteils (1) bildet und dass das wenigstens eine Verbindungsprofilelement (2) selbsttragend ausgeführt ist und einen das Bauteil versteifenden Kern bildet.

2. Bauteil nach dem vorhergehenden Anspruch, **dadurch gekennzeichnet, dass** das wenigstens eine Verbindungsprofilelement (2) zwischen seinen beiden Verbindungsbereichen (6) zumindest einen seitlich auskragenden Quersteg (9) aufweist, wobei vorzugsweise der Quersteg (9) bis an die Außenseite des Bauteils (1) oder darüber hinaus reicht und einen Teil der Oberfläche des Bautells (1) bildet.

3. Bauteil nach einem der vorhergehenden Ansprüche, **dadurch gekennzeichnet, dass** das wenigstens eine Verbindungsprofilelement (2) in seinen Verbindungsbereichen (6) angeformte, vorzugsweise widerhakenartig ausgebildete, Fixierelemente (5) aufweist, welche mit den Verbindungsbereichen (7, 8) des Trägerelements (3) und des Deckelements (4) eine formschlüssige Verbindung bilden, wobei vorzugsweise die Fixierelemente (5) in den beiden Verbindungsbereichen (6) des Verbindungsprofilelements (2) gegenläufig zueinander angeordnet sind.

4. Bauteil nach einem der vorhergehenden Ansprüche, **dadurch gekennzeichnet, dass** das wenigstens eine Verbindungsprofilelement (2) in seinen Verbindungsbereichen (6) eine Vielzahl einzelner Fixierelemente (5) aufweist.

5. Bauteil nach einem der vorhergehenden Ansprüche, **dadurch gekennzeichnet, dass** das wenigstens eine Verbindungsprofilelement (2) in jedem seiner Verbindungsbereiche (6) jeweils wenigstens ein, sich über die gesamte Länge des Verbindungsprofilelements (2) erstreckendes Fixlerelement (5) aufweist.

6. Bauteil nach einem der vorhergehenden Ansprüche, **dadurch gekennzeichnet, dass** das wenigstens eine Verbindungsprofilelement (2) in dem Bereich, der einen Teil der Oberfläche des Bauteils (1) bildet, insbesondere an dem wenigstens einen Quersteg (9), eine Befestigungsvorrichtung, insbesondere eine Nut (10), zur Befestigung, insbesondere Einclipsung, eines Funktionselements, insbesondere eines Beleuchtungselements (12) oder einer Halterung (13) für einen Gebrauchsgegenstand, oder eines Dekorationselements, insbesondere einer Einlegeleiste (11), aufweist.

7. Bauteil nach einem der vorhergehenden Ansprüche, **dadurch gekennzeichnet, dass** das wenigstens eine Verbindungsprofilelement (2) aus einem metallischen Material, vorzugsweise aus einem Aluminiummaterial, besteht.

8. Bauteil nach einem der vorhergehenden Ansprüche, **dadurch gekennzeichnet, dass** das Verbindungsprofilelement (2) zumindest in dem Bereich, welcher einen Teil der Oberfläche des Bauteils (1) bildet, oberflächenbehandelt ist, insbesondere poliert oder gebürstet, ist.

9. Bauteil nach einem der vorhergehenden Ansprüche, **dadurch gekennzeichnet, dass** das Verbindungsprofilelement (2) in dem Bereich, welcher einen Teil der Oberfläche des Bauteils (1) bildet, eine gegenüber der Querschnittsfläche des Querstegs (9) vergrößerte Oberfläche aufweist.

10. Bauteil nach dem vorhergehenden Anspruch, **dadurch gekennzeichnet, dass** die Länge des wenigstens einen Verbindungsprofilelements (2) wenigstens das Zweifache, vorzugsweise wenigstens das Vierfache, seiner Höhe und Breite beträgt.

11. Bauteil nach einem der vorhergehenden Ansprüche, **dadurch gekennzeichnet, dass** sich das wenigstens eine Verbindungsprofillelement (2) im Wesentlichen über die gesamte Länge des Trägerelements (3) und/oder des Deckelements (4) erstreckt.

12. Bauteil nach einem der vorhergehenden Ansprüche, **dadurch gekennzeichnet, dass** das wenigstens eine Verbindungsprofilelement (2) über die Länge des Trägerelements (3) und des Deckelements (4) hinausragt.

13. Bauteil nach dem vorhergehenden Anspruch, **dadurch gekennzeichnet, dass** der Quersteg (9) des Verbindungsprofilelements (2) entlang seiner Längserstreckung wenigstens einen ersten Abschnitt (16) aufweist, welcher bis an die Außenseite des Bauteils (1) reicht und einen Teil der Oberfläche des Bauteils (1) bildet, und wenigstens einen zweiten Abschnitt (17), weicher von dem Trägerelements (3) und/oder dem Deckelement (4) verdeckt ist.

14. Bauteil nach einem der vorhergehenden Ansprüche, **dadurch gekennzeichnet, dass** das Deckelement (4) und/oder das Trägerelement (3) als nicht tragende Blenden ausgeführt sind.

15. Bauteil nach einem der vorhergehenden Ansprüche, **dadurch gekennzeichnet, dass** das wenigstens eine Verbindungsproflelement (2) einer Kontur des Deckelements (4) und/oder des Bauteils (1) folgend vorgeformt ist.

## Claims

1. A component (1) for a vehicle, particularly a passenger car, the component (1) comprising at least one carrier element (3) and at least one cover element (4) connected to the carrier element (3) and having a viewing side, the component (1) further comprising at least one connecting profile element (2) connecting the carrier element (3) and the cover element (4) to each other, and the connecting profile element (2) comprising at least two connecting regions (6), **characterized in that** the at least two connecting regions (6) are preferably disposed opposite each other and preferably extend over the entire length of the connecting profile element, wherein the connecting regions (6) each engage in at least one connecting region (7) of the at least one carrier element (3) corresponding thereto and at least one connecting region (8) of the at least one cover element (4) corresponding thereto, and that the at least one connecting profile element (2) extends between the carrier element (3) and the cover element (4) at least over a portion of the length thereof to the outer side of the component (1) or beyond, and forms part of the surface of the component (1) between the carrier element (3) and the cover element (4), and that the at least one connecting profile element (2) is self-supporting and forms a core reinforcing the component.

2. The component according to the preceding claim, **characterized in that** the at least one connecting profile element (2) comprises at least one laterally protruding transverse web (9) between the two connecting regions (6) thereof, wherein the transverse web (9) preferably extends to the outer side of the component (1) or beyond and forms a part of the surface of the component (1).

3. The component according to any one of the preceding claims, **characterized in that** the at least one connecting profile element (2) comprises fixing elements (5) formed thereon in the connecting regions (6) thereof, preferably implemented as barbed hooks, forming an interlocked connection with the connecting regions (7, 8) of the carrier element (3) and of the cover element (4), wherein the fixing elements (5) are preferably disposed running opposite each other in the two connecting regions (6) of the connecting profile element (2).

4. The component according to any one of the preceding claims, **characterized in that** the at least one connecting profile element (2) comprises a plurality of individual fixing elements (5) in the connecting regions (6) thereof.

5. The component according to any one of the preceding claims, **characterized in that** the at least one connecting profile element (2) comprises at least one fixing element (5) extending over the entire length of the connecting profile element (2) in each of the connecting regions (6) thereof.

6. The component according to any one of the preceding claims, **characterized in that** the at least one connecting profile element (2) comprises a fastening device, particularly a groove (10), for fastening, particularly for clipping in, a functional element, particularly a lighting element (12) or a mounting element (13) for an object of utility or a decorative element, particularly an insert strip (11), in the region forming a part of the surface of the component (1), particularly on the at least one transverse web (9).

7. The component according to any one of the preceding claims, **characterized in that** the at least one connecting profile element (2) is made of a metal material, preferably of an aluminum material.

8. The component according to any one of the preceding claims, **characterized in that** the connecting profile element (2) has been surface treated, particularly polished or brushed, at least in the region forming part of the surface of the component (1).

9. The component according to any one of the preceding claims, **characterized in that** the connecting profile element (2) comprises an enlarged surface in comparison with the cross-sectional area of the transverse web (9) in the region forming a part of the surface of the component (1).

10. The component according to the preceding claim, **characterized in that** the length of the at least one connecting profile element (2) is at least twice, preferably at least four times the height and width thereof.

11. The component according to any one of the preceding claims, **characterized in that** the at least one connecting profile element (2) extends substantially over the entire length of the carrier element (3) and/or of the cover element (4).

12. The component according to any one of the preceding claims, **characterized in that** the at least one connecting profile element (2) protrudes past the length of the carrier element (3) and of the cover element (4).

13. The component according to the preceding claim, **characterized in that** the transverse web (9) of the connecting profile element (2) comprises at least one first segment (16) along the length thereof extending to the outer side of the component (1) and forming part of the surface of the component (1), and at least one second segment (17) covered by the carrier element (3) and/or by the cover element (4).

14. The component according to any one of the preceding claims, **characterized in that** the cover element (4) and/or the carrier element (3) are implemented as non-load-bearing covers.

15. The component according to any one of the preceding claims, **characterized in that** the at least one connecting profile element (2) is preformed to follow a contour of the cover element (4) and/or of the component (1).

## Revendications

1. Élément de construction (1) pour un véhicule, en particulier une voiture particulière, sachant que l'élément de construction (1) comporte au moins un élément porteur (3) et au moins un élément de recouvrement (4) relié à l'élément porteur (3) et présentant une face apparente, sachant que l'élément de construction (1) comporte en outre au moins un élément de profilé de raccordement (2), lequel relie l'élément porteur (3) avec l'élément de recouvrement (4), et sachant que l'élément de profilé de raccordement (2) présente au moins deux zones de raccordement (6), **caractérisé en ce que** les au moins deux zones de raccordement (6) sont disposées de préférence l'une en face de l'autre et s'étendent de préférence sur toute la dimension longitudinale de l'élément de profilé de raccordement, sachant que les zones de raccordement (6) entrent en prise respectivement dans au moins une zone de raccordement (7) leur correspondant de l'au moins un élément porteur (3) et au moins une zone de raccordement (8) leur correspondant de l'au moins un élément de recouvrement (4), que l'au moins un élément de profilé de raccordement (2), entre l'élément porteur (3) et l'élément de recouvrement (4), s'étend sur au moins une partie de sa dimension longitudinale jusqu'à la face extérieure de l'élément de construction (1) ou au-delà et constitue une partie de la surface de l'élément de construction (1) entre l'élément porteur (3) et l'élément de recouvrement (4) et que l'au moins un élément de profilé de raccordement (2) se présente sous une forme autoporteuse et forme une âme raidissant l'élément de construction.

2. Élément de construction selon la revendication précédente, **caractérisé en ce que** l'au moins un élément de profilé de raccordement (2) comporte entre ses deux zones de raccordement (6) au moins une barrette transversale (9) en porte-à-faux latéralement, sachant que la barrette transversale (9) s'étend de préférence jusqu'à la face extérieure de l'élément de construction (1) ou au-delà et forme une partie de la surface de l'élément de construction (1).

3. Élément de construction selon l'une des revendications précédentes, **caractérisé en ce que** l'au moins un élément de profilé de raccordement (2) comporte des éléments de fixation (5) formés dans ses zones de raccordement (6) et se présentant de préférence sous la forme de crochets de retenue, qui forment une liaison mécanique avec les zones de raccordement (7, 8) de l'élément porteur (3) et de l'élément de recouvrement (4), sachant que les éléments de fixation (5) sont disposés de préférence en contre-sens l'un par rapport l'autre dans les deux zones de raccordement (6) de l'élément de profilés de raccordement (2).

4. Élément de construction selon l'une des revendications précédentes, **caractérisé en ce que** l'au moins un élément de profilé de raccordement (2) comporte une multitude d'éléments de fixation individuels (5) dans ses zones de raccordement (6).

5. Élément de construction selon l'une des revendications précédentes, **caractérisé en ce que** l'au moins un élément de profilé de raccordement (2) comporte dans chacune de ses zones de raccordement (6) respectivement au moins un élément de fixation (5) s'étendant sur toute la longueur de l'élément de profilé de raccordement (2).

6. Élément de construction selon l'une des revendications précédentes, **caractérisé en ce que** l'au moins un élément de profilé de raccordement (2) comporte dans la zone formant une partie de la surface de l'élément de construction (1), en particulier à l'au moins une barrette transversale (9), un dispositif de fixation, en particulier une gorge (10), pour la fixation, en particulier le clipsage, d'un élément fonctionnel, en particulier d'un élément d'éclairage (12) ou d'un support de fixation (13) pour un objet usuel, ou d'un élément décoratif, en particulier d'une baguette d'insertion (11).

7. Élément de construction selon l'une des revendications précédentes, **caractérisé en ce que** l'au moins un élément de profilé de raccordement (2) se compose d'un matériau métallique, de préférence d'un matériau d'aluminium.

8. Élément de construction selon l'une des revendications précédentes, **caractérisé en ce que** l'élément de profilé de raccordement (2) est traité en surface, en particulier poli ou brossé, au moins dans la zone formant une partie de la surface de l'élément de construction (1).

9. Élément de construction selon l'une des revendications précédentes, **caractérisé en ce que** l'élément de profilé de raccordement (2) présente dans la zone formant une partie de la surface de l'élément de construction (1) une surface agrandie par rapport à la surface de section transversale de la barrette transversale (9).

10. Élément de construction selon la revendication précédente, **caractérisé en ce que** la longueur de l'au moins un élément de profilé de raccordement (2) représente au moins le double, de préférence au moins le quadruple, de sa hauteur et de sa largeur.

11. Élément de construction selon l'une des revendications précédentes, **caractérisé en ce que** l'au moins un élément de profilé de raccordement (2) s'étend essentiellement sur toute la longueur de l'élément porteur (3) et/ou de l'élément de recouvrement (4).

12. Élément de construction selon l'une des revendications précédentes, **caractérisé en ce que** l'au moins un élément de profilé de raccordement (2) s'étend au-delà de la longueur de l'élément porteur (3) et de l'élément de recouvrement (4).

13. Élément de construction selon la revendication précédente, **caractérisé en ce que** la barrette transversale (9) de l'élément de profilé de raccordement (2) présente le long de sa dimension longitudinale au moins une première section (16), qui s'étend jusqu'à la face extérieure de l'élément de construction (1) et forme une partie de la surface de l'élément de construction (1), et au moins une seconde section (17), qui est cachée par l'élément porteur (3) et/ou l'élément de recouvrement (4).

14. Élément de construction selon l'une des revendications précédentes, **caractérisé en ce que** l'élément de recouvrement (4) et/ou l'élément porteur (3) se présentent sous la forme de caches non-porteurs.

15. Élément de construction selon l'une des revendications précédentes, **caractérisé en ce que** l'au moins un élément de profilé de raccordement (2) est préformé suivant un contour de l'élément de recouvrement (4) et/ou de l'élément de construction (1).
